# EUROPÄISCHE PATENTSCHRIFT

(11) **EP 1 965 905 B1**
(45) Veröffentlichungstag und Bekanntmachung des Hinweises auf die Patenterteilung: **02.07.2014**
(21) Anmeldenummer: 06830207.4
(22) Anmeldetag: 30.11.2006
(51) Int. Cl.: B01J 19/18, C08J 3/00, B01F 7/00, A61L 15/60

(54) **VERFAHREN ZUM KONTINUIERLICHEN MISCHEN VON POLYMERPARTIKELN**
METHOD FOR THE CONTINUOUS MIXING OF POLYMER PARTICLES
PROCEDE DE MELANGE CONTINU DE PARTICULES POLYMERES

(30) Priorität: 07.12.2005 DE 102005058631; 10.02.2006 DE 102006006539
(43) Veröffentlichungstag der Anmeldung: 10.09.2008
(73) Patentinhaber: BASF SE, 67056 Ludwigshafen (DE)
(72) Erfinder: BARTHEL, Holger, 68723 Schwetzingen (DE)
(86) Internationale Anmeldenummer: PCT/EP2006/069103
(87) Internationale Veröffentlichungsnummer: WO 2007/065840

(56) Entgegenhaltungen:
- EP-A2- 0 343 919
- EP-A2- 0 417 761
- EP-A2- 0 648 784
- WO-A-98/43725
- WO-A-2004/037900
- WO-A1-2005/042042
- DE-A1- 2 650 714
- US-A- 4 734 478
- US-A1- 2005 078 551

## Beschreibung

Die vorliegende Erfindung betrifft ein Verfahren zum kontinuierlichen Mischen wasserabsorbierender Polymerpartikel mit Flüssigkeiten oder anderen Partikeln, wobei sich die Polymerpartikel aufgrund ihres Eigengewichts in Produktstromrichtung bewegen und zumindest ein Teil des Mischguts durch die Rotationsbewegung mindestens eines an einer rotierenden Welle befestigten Mischwerkzeugs einen Impuls entgegen der Produktstromrichtung erhält.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Herstellung wasserabsorbierender Polymere ist vielfach beschrieben, siehe beispielsweise "Modern Superabsorbent Polymer Technology", F.L. Buchholz and A.T. Graham, Wiley-VCH, 1998, Seiten 69 bis 117.

Wasserabsorbierende Polymere haben typischerweise eine Zentrifugenretentionskapazität von 25 bis 60 g/g, vorzugsweise von mindestens 30 g/g, bevorzugt von mindestens 32 g/g, besonders bevorzugt von mindestens 34 g/g, ganz besonders bevorzugt von mindestens 35 g/g. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Zur Verbesserung der Anwendungseigenschaften, wie beispielsweise Permeabilität, werden wasserabsorbierende Polymere im allgemeinen nachvernetzt. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, getrocknet und thermisch nachvernetzt. Dazu geeignete Vernetzer sind Verbindungen, die mindestens zwei Gruppen enthalten, die mit den Carboxylatgruppen des hydrophilen Polymeren kovalente Bindungen bilden können oder die mindestens zwei Carboxylgruppen oder andere funktionelle Gruppen mindestens zweier verschiedener Polymerketten des Grundpolymers miteinander vernetzen können.

DE-A 35 23 617 offenbart ein Verfahren zur Nachvernetzung wasserabsorbierender Polymerpartikel, wobei ein Polyol in einem, vorzugsweise wäßrigen, Lösungsmittel dosiert wird.

WO 04/037900 offenbart ein Verfahren zum Mischen wasserabsorbierender Polymer-partikel mit wäßrigen Lösungen, wobei durch eine hohe Bewegungsenergie der Polymerteilchen die Bildung von Agglomeraten während des Mischens vermieden wird.

WO 05/080479 beschreibt ein Verfahren zur Nachvernetzung wasserabsorbierender Polymerpartikel, wobei zwei getrennte Lösungen dosiert werden. Gemäß der Patentanmeldung werden vorzugsweise Hochgeschwindigkeitsmischer verwendet.

Die Aufgabe der vorliegenden Erfindung war die Bereitstellung eines verbesserten Verfahrens zum Mischen wasserabsorbierender Polymerpartikel mit wäßrigen Lösungen.

Gelöst wurde die Aufgabe durch ein Verfahren zum kontinuierlichen Mischen wasserabsorbierender Polymerpartikel mit Flüssigkeiten oder anderen Partikeln, wobei sich die Polymerpartikel aufgrund ihres Eigengewichts durch die Schwerkraft in Produktstromrichtung beschleunigt werden und sich die Polymerpartikel von oben nach unten durch den Mischer bewegen, dadurch gekennzeichnet, dass zumindest ein Teil des Mischguts durch die Rotationsbewegung mindestens eines an einer rotierenden Welle befestigten Mischwerkzeugs einen Impuls entgegen der Produktstromrichtung erhält, die äußere Spitze des Mischwerkzeugs eine Umfangsgeschwindigkeit von 3 bis 20 m/s aufweist, der Mischer eine zylindrische Wand mit einem Durchmesser von 90 bis 500 mm aufweist, das Verhältnis von Durchmesser der Umlaufbahn der äußeren Spitze des Mischwerkzeugs zum größtmöglichen Durchmesser dieser Umlaufbahn mindestens 0,6 beträgt, wobei der größtmögliche Durchmesser der Umlaufbahn der theoretische Durchmesser der Umlaufbahn ist, bei dem die Spitze des Mischwerkzeugs die der Wellenachse nächstliegende Mischerwand gerade berühren würde, und der Anstellwinkel des Mischwerkzeugs von größer 0 bis 30° beträgt, wobei die Vorderkante des Mischwerkzeugs in Rotationsrichtung unterhalb seiner Hinterkante liegt und das Mischwerkzeug die Polymerpartikel entgegen der Produktstromrichtung transportiert.

Flüssigkeiten sind bei 23°C flüssige Stoffe oder durch Temperaturerhöhung verflüssigte Feststoffe. Geeignete flüssige Stoffe sind beispielsweise flüssige Nachvernetzer oder Nachvernetzerlösungen, die auf wasserabsorbierende Polymerpartikel aufgebracht werden.

Andere Partikel sind partikuläre Feststoffe, die von den wasserabsorbierenden Polymerpartikeln verschieden sind. Ein geeigneter partikulärer Feststoff ist beispielsweise pyrogene Kieselsäure.

Die Produktstromrichtung ist die Transportrichtung der Polymerpartikel durch den Mischer, d.h. der Transportweg durch den Mischer vom Mischereingang zum Mischerausgang.

Die Polymerpartikel bewegen sich von oben nach unten durch den Mischer. Dadurch werden die Polymerpartikel aufgrund ihres Eigengewichts durch die Schwerkraft in Produktstromrichtung beschleunigt.

Die Vorderkante des Mischwerkzeugs in Rotationsrichtung liegt unterhalb seiner Hinterkante, d.h. das Mischwerkzeug weist einen positiven Anstellwinkel auf und transportiert die Polymerpartikel entgegen der Produktstromrichtung.

Demnach bedeutet ein negativer Anstellwinkel, dass das Mischwerkzeug die Polymerpartikel in Produktstromrichtung transportiert.

Die Flüssigkeiten oder anderen Partikel werden üblicherweise von oben in den Mischer dosiert, vorzugsweise mittels geeigneter Düsen aufgesprüht, besonders bevorzugt mittels mindestens einer Zweistoffdüse, ganz besonders bevorzugt mittels mindestens vier Zweistoffdüsen.

Bei Verwendung mehrerer Düsen kann die aufzusprühende Flüssigkeit und können die aufzusprühenden anderen Partikel besser verteilt werden. Vorteilhaft können auch mehrere Düsen, beispielsweise zwei, über eine gemeinsame Zuleitung versorgt werden.

Durch Verwendung von Mischern, in denen das Mischgut frei fällt, kann die Agglomerationsneigung beim Mischen wasserabsorbierender Polymerpartikel mit wässrigen Flüssigkeiten minimiert werden. Das Mischergebnis wurde bislang über eine ausreichend hohe Umfangsgeschwindigkeit der Spitzen der Mischwerkzeuge erreicht. Dabei wurden Mischwerkzeuge mit negativem Anstellwinkel verwendet und die wasserabsorbierenden Polymerpartikel erhielten durch die Rotation der Mischwerkzeuge einen Impuls in Produktstromrichtung und quer zur Produktstromrichtung.

Der vorliegenden Erfindung liegt die Erkenntnis zugrunde, dass durch Umkehr der bislang üblichen Transportrichtung der Mischwerkzeuge bereits bei moderaten Umfangsgeschwindigkeiten eine Verweilzeitverteilung erreicht wird, für die bislang sehr viel höhere Umfangsgeschwindigkeiten notwendig waren.

Geeignete Mischwerkzeuge sind beispielsweise Messer oder Paddel.

Die Anzahl der Mischwerkzeuge beträgt vorzugsweise von 2 bis 64, besonders bevorzugt von 4 bis 32, ganz besonders bevorzugt von 8 bis 16. Es ist möglich, dass sich je 2, 4 oder 8 Mischwerkzeuge in einer gemeinsamen Ebene befinden.

Die Mischwerkzeuge können radial seitlich von der Welle abstehen, d.h. der Winkel zwischen der Wellenachse und der Verbindungslinie von der Befestigung des Mischwerkzeugs an der Welle und der Spitze des Mischwerkzeugs beträgt ungefähr 90°.

Die Mischwerkzeuge können aber auch paarweise V-förmig seitlich von der Welle abstehen, wobei der durch die paarweise angeordneten Mischwerkzeuge eingeschlossene Winkel vorzugsweise von 30 bis 120°, besonders bevorzugt von 45 bis 105°, ganz besonders bevorzugt von 60 bis 90°, beträgt.

Es ist aber auch möglich beide Anordnungen von Mischwerkzeugen in einem Mischer zu verwenden.

Die Welle ist vorzugsweise einseitig oder zweiseitig gelagert.

Die Umfangsgeschwindigkeit der Mischwerkzeuge beträgt von 3 bis 20 m/s, vorzugsweise von 4 bis 18 m/s, besonders bevorzugt von 6 bis 15 m/s, ganz besonders bevorzugt von 8 bis 12 m/s.

Die Produktstromrichtung ist typischerweise weniger als 45°, vorzugsweise weniger als 30°, besonders bevorzugt weniger als 15°, ganz besonders bevorzugt weniger als 5°, gegenüber der Vertikalen geneigt. Vorzugsweise fallen die Polymerpartikel senkrecht von oben nach unten durch den Mischer, d.h. die Produktstromrichtung ist vertikal.

Der Winkel zwischen Produktstromrichtung und Wellenachse beträgt vorzugsweise weniger als 10°, besonders bevorzugt weniger als 5°, ganz besonders bevorzugt weniger als 1 °. Vorzugsweise sind Produktstromrichtung und Wellenachse identisch, d.h. der Winkel zwischen beiden ist 0°.

Der Anstellwinkel des mindestens eines Mischwerkzeugs beträgt von größer 0 bis 30°, vorzugsweise von 5 bis 25°, besonders bevorzugt von 10 bis 20°, ganz besonders bevorzugt von 15 bis 18°.

Der Mischer weist eine zylindrische Wand auf. Der Durchmesser des Zylinders beträgt von 90 bis 500 mm, besonders bevorzugt von 120 bis 400 mm, ganz besonders bevorzugt von 150 bis 350 mm.

Das Verhältnis von Durchmesser der Umlaufbahn der äußeren Spitze des Mischwerkzeugs zum größtmöglichen Durchmesser dieser Umlaufbahn beträgt mindestens 0,6, besonders bevorzugt mindestens 0,7, ganz besonders bevorzugt mindestens 0,8. Der größtmögliche Durchmesser der Umlaufbahn ist der theoretische Durchmesser der Umlaufbahn, bei dem die Spitze des Mischwerkzeugs die der Wellenachse nächstliegende Mischerwand gerade berühren würde. Im Falle eines zylindrischen Mischers mit zentrischer Welle entspricht dieser größtmögliche Durchmesser der Umlaufbahn dem Innendurchmesser des Mischers.

Der Durchsatz an Polymerpartikeln pro m² Querschnittsfläche des Mischers beträgt vorzugsweise von 10 bis 250 t/h, besonders bevorzugt von 25 bis 150 t/h, ganz besonders bevorzugt von 50 bis 100 t/h.

In einer bevorzugten Ausführungsform der vorliegenden Erfindung erhält zumindest ein Teil des Mischguts durch die Rotationsbewegung mindestens eines an einer rotierenden Welle befestigten zusätzlichen Mischwerkzeugs einen Impuls in Produktstromrichtung.

Vorzugsweise werden die Mischwerkzeuge, durch die zumindest ein Teil des Mischguts einen Impuls entgegen der Produktstromrichtung erhält, in Produktstromrichtung vor den Mischwerkzeugen, durch die zumindest ein Teil des Mischguts einen Impuls in Produktstromrichtung erhält, angeordnet.

Besonders bevorzugt befinden sich alle Mischwerkzeuge an einer gemeinsamen Welle.

Der Anstellwinkel der zusätzlichen Mischwerkzeuge beträgt typischerweise von kleiner 0 bis -30°, vorzugsweise von -2 bis -25°, besonders bevorzugt von -5 bis -15°, ganz besonders bevorzugt von -8 bis -12°.

Beispielsweise ist es möglich die Mischwerkzeuge in drei Ebenen anzuordnen, so dass die Mischwerkzeuge der oberen Mischwerkzeugsebene einen positiven Anstellwinkel und die Mischwerkzeuge der unteren beiden Mischwerkzeugsebenen einen negativen Anstellwinkel aufweisen.

Durch diese Kombination von Mischwerkzeugen mit positivem und negativem Anstellwinkel werden der Produktstromrichtung entgegengesetzte Gasströmungen minimiert oder verhindert.

Vorzugsweise wird das erfindungsgemäße Verfahren zur Nachvernetzung wasserabsorbierender Polymerpartikel verwendet. Dazu wird vorzugsweise mindestens ein Nachvernetzer als wässrige Lösung verwendet. Die wässrige Lösung kann organische Verbindungen, wie Isopropanol, Propylenglykol oder 1,3-Propandiol, als Cosolvens enthalten.

Weiterhin eignet sich das erfindungsgemäße Verfahren zum Einmischen weiterer Flüssigkeiten, wie Wasser und wässrigen Lösungen, sowie anderer Partikel, wie pyrogene Kieselsäure.

In einer besonders bevorzugten Ausführungsform wird ein vertikaler zylindrischer Mischer mit vertikaler Wellenachse verwendet. Die Mischwerkzeuge sind in zwei oder drei Reihen übereinander angeordnet, wobei jede Reihe vier Paare V-förmig angeordneter Mischwerkzeuge mit positivem Anstellwinkel aufweist.

Die im erfindungsgemäßen Verfahren einsetzbaren wasserabsorbierenden Polymerpartikel können durch Polymerisation einer Monomerlösung, enthaltend
a) mindestens ein ethylenisch ungesättigtes, säuregruppentragendes Monomer,
b) mindestens einen Vernetzer,
c) wahlweise ein oder mehrere mit a) copolymerisierbare ethylenisch und/oder allylisch ungesättigte Monomere und
d) wahlweise ein oder mehrere wasserlösliche Polymere, auf die die Monomere a), b) und ggf. c) zumindest teilweise aufgepfropft werden können,
wobei das dabei erhaltene Polymer getrocknet und klassiert wird, hergestellt werden.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 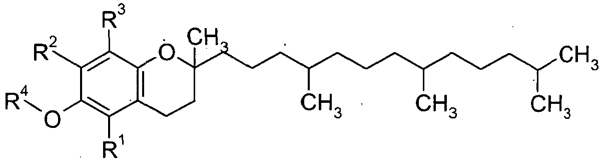 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R⁴ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere bevorzugt um 50 Gew.-ppm, Hydrochinonhalbether, jeweils bezogen auf Acrylsäure, wobei Acrylsäuresalze rechnerisch als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die wasserabsorbierenden Polymere sind vernetzt, d.h. die Polymerisation wird in Gegenwart von Verbindungen mit mindestens zwei polymerisierbaren Gruppen, die in das Polymernetzwerk radikalisch einpolymerisiert werden können, durchgeführt. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 0 530 438 beschrieben, Di- und Triacrylate, wie in EP-A 0 547 847, EP-A 0 559 476, EP-A 0 632 068, WO 93/21237, WO 03/104299, WO 03/104300, WO 03/104301 und DE-A 10331450 beschrieben, gemischte Acrylate, die neben Acrylatgruppen weitere ethylenisch ungesättigte Gruppen enthalten, wie in DE-A 103 31 456und DE-A 103 55.401 beschrieben, oder Vernetzermischungen, wie beispielsweise in DE-A 195 43 368, DE-A 196 46 484, WO 90/15830 und WO 02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine wie sie beispielsweise in DE-A 103 19 462 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3-bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Die Menge an Vernetzer b) beträgt vorzugsweise 0,001 bis 10 mol-%, besonders bevorzugt 0,01 bis 5 mol-%, ganz besonders bevorzugt 0,1 bis 2 mol-%, jeweils bezogen auf das Monomer a).

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Polymers sowie weitere geeignete hydrophile ethylenisch ungesättigte Monomere a) werden in DE-A 199 41 423, EP-A 0 686 650, WO 01/45758 und WO 03/104300 beschrieben.

Geeignete Reaktoren sind Knetreaktoren oder Bandreaktoren. Im Kneter wird das bei der Polymerisation einer wässrigen Monomerlösung entstehende Polymergel durch beispielsweise gegenläufige Rührwellen kontinuierlich zerkleinert, wie in WO 01/38402 beschrieben. Die Polymerisation auf dem Band wird beispielsweise in DE-A 38 25 366 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Vorteilhaft wird das Hydrogel nach dem Verlassen des Polymerisationsreaktors noch bei höherer Temperatur, vorzugsweise mindestens 50°C, besonders bevorzugt mindestes 70°C, ganz besonders bevorzugt mindestens 80°C, sowie vorzugsweise weniger als 100°C, gelagert, beispielsweise in isolierten Behältern. Durch die Lagerung, üblicherweise 2 bis 12 Stunden, wird der Monomerumsatz weiter erhöht.

Die Säuregruppen der erhaltenen Hydrogele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrögencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Eine weitere wichtige Funktion der Trocknung des Gels ist die hier noch stattfindende Verringerung des Restmonomerengehaltes im Superabsorber. Bei der Trocknung zerfallen nämlich eventuell noch vorhandene Reste der Initiatoren und führen zu einer Einpolymerisation von noch vorhandenen Restmonomeren. Außerdem reißen die verdampfenden Wassermengen noch vorhandene freie wasserdampfflüchtige Monomere, wie beispielsweise Acrylsäure mit, und verringern so ebenfalls den Restmonomerengehalt im Superabsorber.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Anschließend kann das erhaltene Polymer nachvernetzt werden. Hierzu geeignete Nachvernetzer sind Verbindungen, die mindestens zwei Gruppen enthalten, die mit den Carboxylatgruppen der Polymere kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A 0 083 022, EP-A 0 543 303 und EP-A 0 937 736 beschrieben, mehrwertige Alkohole, wie in DE-C 33 14 019, DE-C 35 23 617 und EP-A 450 922 beschrieben, oder ß-Hydroxyalkylamide, wie in DE-A 102 04 938 und US 6,239,230 beschrieben. Geeignet sind ferner Verbindungen mit gemischter Funktionalität, wie Glycidol, 3-Ethyl-3-oxetanmethanol (Trimethylolpropanoxetan), wie in EP-A 1 199 327 beschrieben, Aminoethanol, Diethanolamin, Triethanolamin oder Verbindungen, die nach der ersten Reaktion eine weitere Funktionalität ausbilden, wie Ethylenoxid, Propylenoxid, Isobutylenoxid, Aziridin, Azetidin oder Oxetan.

Des weiteren sind in DE-A 40 20 780 zyklische Karbonate, in DE-A 198 07 502 2-Oxazolidon und dessen Derivate, wie N-(2-Hydroxyethyl)-2-oxazolidon, in DE-A 198 07 992 Bis- und Poly-2-oxazolidinone, in DE-A 198 54 573 2-Oxotetrahydro-1,3-oxazin und dessen Derivate, in DE-A 198 54 574 N-Acyl-2-oxazolidone, in DE-A 102 04 937 zyklische Harnstoffe, in DE-A 103 34 584 bizyklische Amidacetale, in EP-A 1 199 327 Oxetane und zyklische Harnstoffe und in WO 03/031482 Morpholin-2,3-dion und dessen Derivate als geeignete Nachvernetzer beschrieben.

Bevorzugte Nachvernetzer sind Oxazolidon und dessen Derivate, insbesondere N-(2-Hydroxyethyl)-2-oxazolidon.

Die Menge an Nachvernetzer beträgt vorzugsweise 0,001 bis 5 Gew.-%, besonders bevorzugt 0,01 bis 2,5 Gew.-%, ganz besonders bevorzugt 0,1 bis 1 Gew.-% jeweils bezogen auf das Polymer.

Die Nachvernetzung wird üblicherweise so durchgeführt, dass eine Lösung, vorzugsweise eine wässrige Lösung, des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Der Nachvernetzer wird vorteilhaft gemäß dem erfindungsgemäßen Verfahren mit dem Polymer vermischt und anschließend thermisch getrocknet.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann durch Beheizung des Mantels oder Einblasen von Warmluft erfolgen. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

### Beispiele

Für die Beispiele wurde das Mischverhalten in einem Schugi® Flexomix Typ 335 (Hosokawa Micron Group, Japan) simuliert.

Der Mischprozess wurde mittels Diskrete-Elemente-Methode (DEM) berechnet. Dabei werden die Bahnkurven jedes einzelnen in der Geometrie befindlichen Partikels unter der Wirkung äußerer Kräfte simultan verfolgt. Die Kräfte, die in diesem Fall Berücksichtigung finden, sind die Schwerkraft sowie Kontaktkräfte, die bei einem Kontakt zwischen zwei Partikeln bzw. zwischen Partikeln und stehenden (Mantelgeometrie) oder bewegten Wänden (Mischwerkzeuge) auftreten. Es wird hier davon ausgegangen, dass ausschließlich Gleitreibung auftritt. Für alle Partikelkontakte wurde ein lineares Feder-Dämpfer-Modell verwendet. Eine Interaktion mit einer Gasströmung wurde nicht betrachtet.

Die simulierten Partikel hatten einen Durchmesser von 5 mm und eine Feststoffdichte von 1640 kg/m³. Der Wandreibungswinkel und der innere Reibungswinkel der Partikel beträgt 42°. Die Federkonstante beträgt 400 N/m und der effektive Restitutionskoeffizient der Partikel wird zu 0,5 gesetzt. Der Massenstrom der Partikel beträgt 8t/h. Für jedes Partikel wird die Zeit zwischen dem Eintritt in die Geometrie und dem Austritt aus der Geometrie gemessen. Ein stationärer Betriebszustand stellte sich je nach Fahrweise nach 2 bis 5 Sekunden ein. Die Verweilzeitverteilung wurde erst nach Erreichen des stationären Betriebszustandes bestimmt.

### Beispiel 1 (Vergleichsbeispiel):

Die Verweilzeitverteilung wurde für eine Drehzahl von 1.800 Upm berechnet. Die Mischwerkzeuge wiesen einen negativen Anstellwinkel von 18° auf, d.h. die Partikel erhielten durch die rotierenden Mischwerkzeuge einem Impuls in Produktstromrichtung.

**Tab. 1:1.800 Upm, negativer Anstellwinkel**

| Zeit [s] | Anzahl | Summe | Häufigkeit [%] | Kumuliert [%] |
|---|---|---|---|---|
| 0,96 | 2 | 2 | 0,02 | 0,02 |
| 1,12 | 10 | 12 | 0,11 | 0,14 |
| 1,28 | 76 | 88 | 0,86 | 1,00 |
| 1,44 | 284 | 372 | 3,21 | 4,21 |
| 1,60 | 753 | 1125 | 8,51 | 12,72 |
| 1,76 | 1227 | 2352 | 13,87 | 26,59 |
| 1,92 | 1453 | 3805 | 16,43 | 43,02 |
| 2,08 | 1391 | 5196 | 15,73 | 58,75 |
| 2,24 | 1113 | 6309 | 12,58 | 71,34 |
| 2,40 | 766 | 7075 | 8,66 | 80,00 |
| 2,56 | 563 | 7638 | 6,37 | 86,36 |
| 2,72 | 385 | 8023 | 4,35 | 90,72 |
| 2,88 | 249 | 8272 | 2,82 | 93,53 |
| 3,04 | 153 | 8425 | 1,73 | 95,26 |
| 3,20 | 118 | 8543 | 1,33 | 96,60 |
| 3,36 | 86 | 8629 | 0,97 | 97,57 |
| 3,52 | 66 | 8695 | 0,75 | 98,32 |
| 3,68 | 42 | 8737 | 0,47 | 98,79 |
| 3,84 | 52 | 8789 | 0,59 | 99,38 |
| 4,00 | 37 | 8826 | 0,42 | 99,80 |
| 4,16 | 15 | 8841 | 0,17 | 99,97 |
| 4,32 | 3 | 8844 | 0,03 | 100,00 |

### Beispiel 2 (Vergleichsbeispiel):

Es wurde verfahren wie unter Beispiel 1. Die Drehzahl wurde auf 700 Upm gesenkt.

**Tab. 2: 700 Upm, negativer Anstellwinkel**

| Zeit [s] | Anzahl | Summe | Häufigkeit [%] | Kumuliert [%] |
|---|---|---|---|---|
| 0,64 | 1 | 1 | 0,00 | 0,00 |
| 0,80 | 130 | 131 | 0,56 | 0,56 |
| 0,96 | 2206 | 2337 | 9,44 | 10,00 |
| 1,12 | 6787 | 9124 | 29,03 | 39,02 |
| 1,28 | 8031 | 17155 | 34,35 | 73,37 |
| 1,44 | 4296 | 21451 | 18,37 | 91,75 |
| 1,60 | 1404 | 22855 | 6,00 | 97,75 |
| 1,76 | 394 | 23249 | 1,69 | 99,44 |
| 1,92 | 89 | 23338 | 0,38 | 99,82 |
| 2,08 | 32 | 23370 | 0,14 | 99,95 |
| 2,24 | 7 | 23377 | 0,03 | 99,98 |
| 2,40 | 2 | 23379 | 0,01 | 99,99 |
| 2,56 | 2 | 23381 | 0,01 | 100,00 |

### Beispiel 3:

Es wurde verfahren wie unter Beispiel 2. Die Mischwerkzeuge wiesen einen positiven Anstellwinkel von 18° auf, d.h. die Partikel erhielten durch die rotierenden Mischwerkzeuge einem Impuls entgegen der Produktstromrichtung.

**Tab. 3: 700 Upm, positiver Anstellwinkel**

| Zeit [s] | Anzahl | Summe | Häufigkeit [%] | Kumuliert [%] |
|---|---|---|---|---|
| 1,12 | 1 | 1 | 0,00 | 0,00 |
| 1,28 | 4 | 5 | 0,01 | 0,02 |
| 1,44 | 20 | 25 | 0,07 | 0,09 |
| 1,60 | 167 | 192 | 0,61 | 0,70 |
| 1,76 | 670 | 862 | 2,46 | 3,16 |
| 1,92 | 1897 | 2759 | 6,96 | 10,13 |
| 2,08 | 3207 | 5966 | 11,77 | 21,90 |
| 2,24 | 4081 | 10047 | 14,98 | 36,88 |
| 2,40 | 4195 | 14242 | 15,40 | 52,28 |
| 2,56 | 3460 | 17702 | 12,70 | 64,99 |

**Tab. 3: 700 Upm, positiver Anstellwinkel (Fortsetzung)**

| Zeit [s] | Anzahl | Summe | Häufigkeit [%] | Kumuliert [%] |
|---|---|---|---|---|
| 2,72 | 2475 | 20177 | 9,09 | 74,07 |
| 2,88 | 1824 | 22001 | 6,70 | 80,77 |
| 3,04 | 1195 | 23196 | 4,39 | 85,15 , |
| 3,20 | 796 | 23992 | 2,92 | 88,08 |
| 3,36 | 667 | 24659 | 2,45 | 90,52 |
| 3,52 | 463 | 25122 | 1,70 | 92,22 |
| 3,68 | 363 | 25485 | 1,33 | 93,56 |
| 3,84 | 306 | 25791 | 1,12 | 94,68 |
| 4,00 | 260 | 26051 | 0,95 | 95,64 |
| 4,16 | 221 | 26272 | 0,81 | 96,45 |
| 4,32 | 139 | 26411 | 0,51 | 96,96 |
| 4,48 | 136 | 26547 | 0,50 | 97,46 |
| 4,64 | 110 | 26657 | 0,40 | 97,86 |
| 4,80 | 88 | 26745 | 0,32 | 98,18 |
| 4,96 | 90 | 26835 | 0,33 | 98,51 |
| 5,12 | 61 | 26896 | 0,22 | 98,74 |
| 5,28 | 59 | 26955 | 0,22 | 98,95 |
| 5,44 | 47 | 27002 | 0,17 | 99,13 |
| 5,60 | 38 | 27040 | 0,14 | 99,27 |
| 5,76 | 34 | 27074 | 0,12 | 99,39 |
| 5,92 | 31 | 27105 | 0,11 | 99,50 |
| 6,08 | 20 | 27125 | 0,07 | 99,58 |
| 6,24 | 26 | 27151 | 0,10 | 99,67 |
| 6,40 | 13 | 27164 | 0,05 | 99,72 |
| 6,56 | 13 | 27177 | 0,05 | 99,77 |
| 6,72 | 18 | 27195 | 0,07 | 99,83 |
| 6,88 | 10 | 27205 | 0,04 | 99,87 |
| 7,04 | 9 | 27214 | 0,03 | 99,90 |
| 7,20 | 7 | 27221 | 0,03 | 99,93 |
| 7,36 | 2 | 27223 | 0,01 | 99,94 |
| 7,52 | 3 | 27226 | 0,01 | 99,95 |
| 7,68 | 4 | 27230 | 0,01 | 99,96 |
| 7,84 | 2 | 27232 | 0,01 | 99,97 |
| 8,00 | 8 | 27240 | 0,03 | 100,00 |

### Beispiel 4:

Es wurde verfahren wie unter Beispiel 3. Die Drehzahl wurde auf 575 Upm gesenkt.

**Tab. 4: 575 Upm, positiver Anstellwinkel**

| Zeit [s] | Anzahl | Summe | Häufigkeit [%] | Kumuliert [%] |
|---|---|---|---|---|
| 0,96 | 1 | 1 | 0,00 | 0,00 |
| 1,12 | 3 | 4 | 0,01 | 0,02 |
| 1,28 | 17 | 21 | 0,07 | 0,09 |
| 1,44 | 230 | 251 | 1,00 | 1,09 |
| 1,60 | 965 | 1216 | 4,18 | 5,27 |
| 1,76 | 2168 | 3384 | 9,39 | 14,65 |
| 1,92 | 3572 | 6956 | 15,47 | 30,12 |
| 2,08 | 3984 | 10940 | 17,25 | 47,38 |
| 2,24 | 3581 | 14521 | 15,51 | 62,88 |
| 2,40 | 2661 | 17182 | 11,52 | 74,41 |
| 2,56 | 1872 | 19054 | 8,11 | 82,51 |
| 2,72 | 1239 | 20293 | 5,37 | 87,88 |
| 2,88 | 868 | 21161 | 3,76 | 91,64 |
| 3,04 | 583 | 21744 | 2,52 | 94,16 |
| 3,20 | 397 | 22141 | 1,72 | 95,88 |
| 3,36 | 308 | 22449 | 1,33 | 97,22 |
| 3,52 | 203 | 22652 | 0,88 | 98,09 |
| 3,68 | 137 | 22789 | 0,59 | 98,69 |
| 3,84 | 98 | 22887 | 0,42 | 99,11 |
| 4,00 | 58 | 22945 | 0,25 | 99,36 |
| 4,16 | 54 | 22999 | 0,23 | 99,60 |
| 4,32 | 32 | 23031 | 0,14 | 99,74 |
| 4,48 | 20 | 23051 | 0,09 | 99,82 |
| 4,64 | 13 | 23064 | 0,06 | 99,88 |
| 4,80 | 14 | 23078 | 0,06 | 99,94 |
| 4,96 | 6 | 23084 | 0,03 | 99,97 |
| 5,12 | 2 | 23086 | 0,01 | 99,97 |
| 5,28 | 2 | 23088 | 0,01 | 99,98 |
| 5,44 | 1 | 23089 | 0,00 | 99,99 |
| 5,60 | 2 | 23091 | 0,01 | 100,00 |

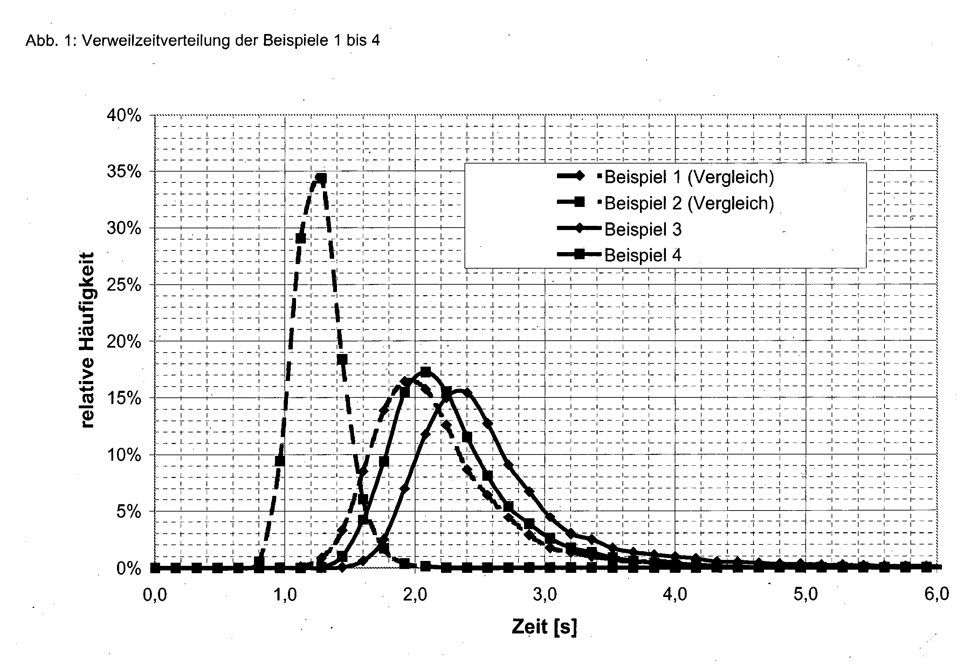

## Patentansprüche

1. Verfahren zum kontinuierlichen Mischen wasserabsorbierender Polymerpartikel mit Flüssigkeiten oder anderen Partikeln, wobei sich die Polymerpartikel aufgrund ihres Eigengewichts durch die Schwerkraft in Produktstromrichtung beschleunigt werden und sich die Polymerpartikel von oben nach unten durch den Mischer bewegen, **dadurch gekennzeichnet, dass** zumindest ein Teil des Mischguts durch die Rotationsbewegung mindestens eines an einer rotierenden Welle befestigten Mischwerkzeugs einen Impuls entgegen der Produktstromrichtung erhält, die äußere Spitze des Mischwerkzeugs eine Umfangsgeschwindigkeit von 3 bis 20 m/s aufweist, der Mischer eine zylindrische Wand mit einem Durchmesser von 90 bis 500 mm aufweist, das Verhältnis von Durchmesser der Umlaufbahn der äußeren Spitze des Mischwerkzeugs zum größtmöglichen Durchmesser dieser Umlaufbahn mindestens 0,6 beträgt, wobei der größtmögliche Durchmesser der Umlaufbahn der theoretische Durchmesser der Umlaufbahn ist, bei dem die Spitze des Mischwerkzeugs die der Wellenachse nächstliegende Mischerwand gerade berühren würde, und der Anstellwinkel des Mischwerkzeugs von größer 0 bis 30° beträgt, wobei die Vorderkante des Mischwerkzeugs in Rotationsrichtung unterhalb seiner Hinterkante liegt und das Mischwerkzeug die Polymerpartikel entgegen der Produktstromrichtung transportiert.

2. Verfahren gemäß Anspruch 1, **dadurch gekennzeichnet, dass** mindestens zwei Mischwerkzeuge verwendet werden, wobei sich die Mischwerkzeuge auf unterschiedlichen Höhen entlang der Welle befinden können.

3. Verfahren gemäß Anspruch 1 oder 2, **dadurch gekennzeichnet, dass** die Welle einseitig oder zweiseitig gelagert ist.

4. Verfahren gemäß einem der Ansprüche 1 bis 3, **dadurch gekennzeichnet, dass** die äußere Spitze des Mischwerkzeugs eine Umfangsgeschwindigkeit von 4 bis 18 m/s aufweist.

5. Verfahren gemäß einem der Ansprüche 1 bis 4, **dadurch gekennzeichnet, dass** die Produktstromrichtung um weniger als 45° gegenüber der Vertikalen geneigt ist.

6. Verfahren gemäß einem der Ansprüche 1 bis 5, **dadurch gekennzeichnet, dass** der Winkel zwischen Produktstromrichtung und Wellenachse weniger als 10° beträgt.

7. Verfahren gemäß einem der Ansprüche 1 bis 6, **dadurch gekennzeichnet, dass** der Anstellwinkel des Mischwerkzeugs von 5 bis 25° beträgt.

8. Verfahren gemäß einem der Ansprüche 1 bis 7, **dadurch gekennzeichnet, dass** der Mischer eine zylindrische Wand mit einem Durchmesser von 120 bis 400 mm aufweist.

9. Verfahren gemäß einem der Ansprüche 1 bis 8, **dadurch gekennzeichnet, dass** das Verhältnis von Durchmesser der Umlaufbahn der äußeren Spitze des Mischwerkzeugs zum größtmöglichen Durchmesser dieser Umlaufbahn mindestens 0,7 beträgt.

10. Verfahren gemäß einem der Ansprüche 1 bis 9, **dadurch gekennzeichnet, dass** der Durchsatz an Polymerpartikeln pro m² Querschnittsfläche des Mischers in Produktstromrichtung von 10 bis 250 t/h beträgt.

11. Verfahren gemäß einem der Ansprüche 1 bis 10, **dadurch gekennzeichnet, dass** die Polymerpartikel einen Durchmesser von weniger als 1 mm aufweisen.

12. Verfahren zur Herstellung wasserabsorbierender Polymerpartikel, **dadurch gekennzeichnet, dass** die Polymerpartikel gemäß einem Verfahren der Ansprüche 1 bis 11 mit mindestens einem Nachvernetzer, wahlweise als Lösung, gemischt werden.

13. Verfahren gemäß einem der Ansprüche 1 bis 12, **dadurch gekennzeichnet, dass** zumindest ein Teil des Mischguts durch die Rotationsbewegung mindestens eines an einer rotierenden Welle befestigten zusätzlichen Mischwerkzeugs einen Impuls in Produktstromrichtung erhält.

14. Verfahren gemäß Anspruch 13, **dadurch gekennzeichnet, dass** sich die zusätzlichen Mischwerkzeuge, durch die zumindest ein Teil des Mischguts einen Impuls in Produktstromrichtung erhält, in Produktstromrichtung hinter den Mischwerkzeugen, durch die zumindest ein Teil des Mischguts einen Impuls entgegen der Produktstromrichtung erhält, befinden.

15. Verfahren gemäß Anspruch 13 oder 14, **dadurch gekennzeichnet, dass** der Anstellwinkel der zusätzlichen Mischwerkzeuge von kleiner 0 bis -30° beträgt.

## Claims

1. A process for continuous mixing of water-absorbing polymeric particles with liquids or other particles while the polymeric particles are, under their own weight, accelerated in the product stream direction by the force of gravity and the polymeric particles move downwardly through the mixer, wherein at least a portion of the material undergoing mixing acquires, through the rotational movement of at least one mixing tool secured to a rotating shaft, a momentum opposite the product stream direction, the extreme tip of the mixing tool has a circumferential speed in the range from 3 to 20 m/s, the mixer has a cylindrical wall having a diameter in the range from 90 to 500 mm, the ratio of the diameter of the circumferential path of the extreme tip of the mixing tool to the largest possible diameter of this circumferential path is at least 0.6, the largest possible diameter of the circumferential path being the theoretical diameter of the circumferential path at which the tip of the mixing tool would just touch the mixer wall nearest the shaft axis, and the pitch angle of the mixing tool is in the range from greater than 0 to 30°, the front edge of the mixing tool in the direction of rotation being below its rear edge and the mixing tool transporting the polymeric particles in the direction opposite the product stream direction.

2. The process according to claim 1 wherein at least two mixing tools are utilized and the mixing tools may be situated at different heights along the shaft.

3. The process according to claim 1 or 2 wherein the shaft is mounted at one or both of the ends.

4. The process according to any one of claims 1 to 3 wherein the extreme tip of the mixing tool has a circumferential speed in the range from 4 to 18 m/s.

5. The process according to any one of claims 1 to 4 wherein the product stream direction is less than 45° inclined with regard to the vertical.

6. The process according to any one of claims 1 to 5 wherein the angle between the product stream direction and the shaft axis is less than 10°.

7. The process according to any one of claims 1 to 6 wherein the pitch angle of the mixing tool is in the range from 5 to 25°.

8. The process according to any one of claims 1 to 7 wherein the mixer has a cylindrical wall having a diameter in the range from 120 to 400 mm.

9. The process according to any one of claims 1 to 8 wherein the ratio of the diameter of the circumferential path of the extreme tip of the mixing tool to the largest possible diameter of this circumferential path is at least 0.7.

10. The process according to any one of claims 1 to 9 wherein the throughput of polymeric particles per m² of cross-sectional area of the mixer in the product stream direction is in the range from 10 to 250 t/h.

11. The process according to any one of claims 1 to 10 wherein the polymeric particles are less than 1 mm in diameter.

12. A process for producing water-absorbing polymeric particles, which comprises the polymeric particles being mixed with at least one postcrosslinker, selectively as a solution, according to a process of claims 1 to 11.

13. The process according to any one of claims 1 to 12, wherein at least a portion of the material undergoing mixing acquires, through the rotational movement of at least one additional mixing tool secured to a rotating shaft, a momentum in the product stream direction.

14. The process according to claim 13 wherein the additional mixing tools through which at least a portion of the material undergoing mixing acquires a momentum in the product stream direction are situated in terms of the product stream direction downstream of the mixing tools through which at least a portion of the material undergoing mixing acquires a momentum opposite the product stream direction.

15. The process according to claim 13 or 14 wherein the pitch angle of the additional mixing tools is in the range from less than 0 to -30°.

## Revendications

1. Procédé de mélange continu de particules polymères absorbant l'eau avec des liquides ou d'autres particules, les particules polymères étant accélérées en raison de leur poids propre par la force de pesanteur dans la direction d'écoulement du produit et les particules polymères se déplaçant du haut vers le bas dans le mélangeur, **caractérisé en ce qu'**au moins une partie du mélange obtient une impulsion opposée à la direction d'écoulement du produit par le mouvement de rotation d'au moins un outil de mélange fixé à un arbre rotatif, la pointe extérieure de l'outil de mélange présente une vitesse périphérique de 3 à 20 m/s, le mélangeur présente une paroi cylindrique d'un diamètre de 90 à 500 mm, le rapport entre le diamètre de l'orbite de la pointe extérieure de l'outil de mélange et le diamètre le plus grand possible de cette orbite est d'au moins 0,6, le diamètre le plus grand possible de l'orbite étant le diamètre théorique de l'orbite auquel la pointe de l'outil de mélange toucherait juste la paroi du mélangeur la plus proche de l'axe de l'arbre, et l'angle d'inclinaison de l'outil de mélange est de plus de 0 à 30°, le bord d'attaque de l'outil de mélange se trouvant en dessous de son bord de fuite dans la direction de rotation et l'outil de mélange transportant les particules polymères dans la direction opposée à la direction d'écoulement du produit.

2. Procédé selon la revendication 1, **caractérisé en ce qu'**au moins deux outils de mélange sont utilisés, les outils de mélange pouvant se trouver à différentes hauteurs le long de l'arbre.

3. Procédé selon la revendication 1 ou 2, **caractérisé en ce que** l'arbre est monté d'un côté ou des deux côtés.

4. Procédé selon l'une quelconque des revendications 1 à 3, **caractérisé en ce que** la pointe extérieure de l'outil de mélange présente une vitesse périphérique de 4 à 18 m/s.

5. Procédé selon l'une quelconque des revendications 1 à 4, **caractérisé en ce que** la direction d'écoulement du produit est inclinée de moins de 45° par rapport à la verticale.

6. Procédé selon l'une quelconque des revendications 1 à 5, **caractérisé en ce que** l'angle entre la direction d'écoulement du produit et l'axe de l'arbre est inférieur à 10°.

7. Procédé selon l'une quelconque des revendications 1 à 6, **caractérisé en ce que** l'angle d'inclinaison de l'outil de mélange est de 5 à 25°.

8. Procédé selon l'une quelconque des revendications 1 à 7, **caractérisé en ce que** le mélangeur présente une paroi cylindrique d'un diamètre allant de 120 à 400 mm.

9. Procédé selon l'une quelconque des revendications 1 à 8, **caractérisé en ce que** le rapport entre le diamètre de l'orbite de la pointe extérieure de l'outil de mélange et le diamètre le plus grand possible de cette orbite est d'au moins 0,7.

10. Procédé selon l'une quelconque des revendications 1 à 9, **caractérisé en ce que** le débit des particules polymères par m² de surface de section du mélangeur dans la direction d'écoulement du produit est de 10 à 250 t/h.

11. Procédé selon l'une quelconque des revendications 1 à 10, **caractérisé en ce que** les particules polymères présentent un diamètre inférieur à 1 mm.

12. Procédé de fabrication de particules polymères absorbant l'eau, **caractérisé en ce que** les particules polymères sont mélangées par un procédé selon les revendications 1 à 11 avec au moins un agent de post-réticulation, éventuellement sous la forme d'une solution.

13. Procédé selon l'une quelconque des revendications 1 à 12, **caractérisé en ce qu'**au moins une partie du mélange obtient une impulsion dans la direction d'écoulement du produit par le mouvement de rotation d'au moins un outil de mélange supplémentaire fixé à un arbre rotatif.

14. Procédé selon la revendication 13, **caractérisé en ce que** les outils de mélange supplémentaires grâce auxquels au moins une partie du mélange obtient une impulsion dans la direction d'écoulement du produit se trouvent dans la direction d'écoulement du produit après les outils de mélange grâce auxquels au moins une partie du mélange obtient une impulsion opposée à la direction d'écoulement du produit.

15. Procédé selon la revendication 13 ou 14, **caractérisé en ce que** l'angle d'inclinaison des outils de mélange supplémentaires est de moins de 0 à -30°.
